# EUROPÄISCHE PATENTSCHRIFT

(11) **EP 2 171 869 B1**
(45) Veröffentlichungstag und Bekanntmachung des Hinweises auf die Patenterteilung: **10.11.2010**
(21) Anmeldenummer: 08756839.0
(22) Anmeldetag: 25.06.2008
(51) Int. Cl.: H04B 5/00, H02G 9/06

(54) **NETZWERK UND VERFAHREN ZUR ÜBERTRAGUNG VON DATEN IN ROHRLEITUNGSSYSTEMEN**
NETWORK AND METHOD FOR TRANSMITTING DATA IN A SYSTEM OF PIPES
RÉSEAU ET PROCÉDÉ DE TRANSMISSION DE DONNÉES DAND DES SYSTEMES DE CONDUITS

(30) Priorität: 25.06.2007 AT 9862007
(43) Veröffentlichungstag der Anmeldung: 07.04.2010
(73) Patentinhaber: CableRunner Austria GmbH & Co. KG, 1230 Wien (AT)
(72) Erfinder: KADRNOSKA, Helmut, A-1220 Wien (AT); REISS, Gerhard, A-2361 Laxenburg (AT)
(74) Vertreter: Wildhack & Jellinek
(86) Internationale Anmeldenummer: PCT/AT2008/000229
(87) Internationale Veröffentlichungsnummer: WO 2009/000004

(56) Entgegenhaltungen:
- WO-A-00/06843
- WO-A-02/082610
- DE-A1- 19 701 787
- US-B1- 6 305 427

## Beschreibung

Die Erfindung betrifft ein Netzwerk zur Übertragung von Daten gemäß dem Oberbegriff des Patentanspruches 1 sowie ein Verfahren zur Übertragung von Daten in einem Netzwerk gemäß dem Oberbegriff des Anspruchs 13.

Der Ausbau der zur Telekommunikation erforderlichen Datenleitungen stößt gerade im städtischen Gebieten an seine Grenzen, da insbesondere die für die Verlegung von Glasfaserkabeln notwendigen Rohrsysteme nur mit großem Aufwand erstellt werden können. In den meisten Fällen verhindert die städtische Infrastruktur einfache Maßnahmen zur Verlegung, sodass größere Bauarbeiten erforderlich sind, um Künetten auszugraben, in welchen die Datenleitungen geführt werden. Obwohl bei dieser Technologie eine große Anzahl von Datenleitungen in einem Zug verlegt und ein verlegtes Rohr zur Gänze mit Kabeln gefüllt werden kann, haben diese Verfahren Nachteile, wie z.B. Lärm- und Staubemissionen, Verkehrsbehinderungen und die damit verbundenen hohen Kosten. Als weit bessere Alternative bietet sich die Mitbenutzung von bereits vorhandenen hohlraumbildenden Einbauten, wie z.B. Abwasser und Regenwasserkanalisationen, an. Diese Technik kommt ohne umfangreiche Aufgrabungsarbeiten aus und ist darüber hinaus preisgünstig und schnell. Die Verlegung erfolgt ohne Beeinträchtigung von Verkehr und Geschäftsleben.

Eines der Hauptprobleme, welches im Zusammenhang mit der Verlegung von Datenleitungen in Rohrsystemen auftritt, ist, dass zwar die Datenleitungen im Rohrsystem ohne allzu großen Aufwand verlegt werden können, aber die Möglichkeit zur Abzweigung zu einzelnen Teilnehmern Schwierigkeiten bereitet und mitunter nur eingeschränkt möglich ist. DE 197 01 787 A1 stellt ein solches System dan.

Die Erfindung stellt sich die Aufgabe, ein konstruktiv einfach zu erstellendes Netzwerk zu schaffen, insbesondere die Aufgabe, das Problem, welches durch die mangelnde Abzweigungsmöglichkek von in Rohren verlegten Datenleitungen besteht, zu lösen.

Die Erfindung löst die Aufgaben bei einem Netzwerk der eingangs genannten Art gemäß den Merkmalen des Kennzeichens des Anspruchs 1 bzw. bei einem Verfahren der eingangs genannten Art mit den im Kennzeichen des Anspruches 13 angeführten Merkmalen.

Ein erfindungsgemäßes Netzwerk umfasst ein übliches Abwasser- bzw. Kanal-Rohrleitungssystem, welches ein Hauptrohr sowie mindestens einen in das Hauptrohr einmündenden Einzelanschluss umfasst, welcher z.B. von der Sanitäreinrichtung eines Gebäudes bzw. einer Wohnung zum Hauptabwasserrohr geführt ist. Eine derartige Konstellation von Abwasserleitungen ist bei Hausabwassersystemen üblich. Des weiteren wird entweder direkt in das Hauptrohr oder über einen in das Hauptrohr einmündenden Einzelanschluss oder einem an das Hauptrohr angeschlossenen Serviceschacht eine Datenleitung in das Hauptrohr eingebracht bzw. dort verlegt, wobei diese Datenleitung an eine zentrale Datenverteilereinheit, vorzugsweise einen Server, angeschlossen ist. Diese zentrale Datenverteileinheit kann an ein Datennetzwerk, insbesondere das Internet, angeschlossen sein. Für jeden Einzelanschluss, welcher mit Daten versorgt bzw. mit dem kommuniziert werden soll, sind eine eigene Datenleitung, welche an die zentrale Datenverteilereinheit angeschlossen ist und im Hauptrohr bis zu der Stelle der Einmündung des entsprechenden Einzelanschlusses in das Hauptrohr verläuft, sowie eine weitere Datenleitung vorgesehen, welche im Einzelanschluss, beispielsweise von einem Haus oder einer Wohnung ausgehend, bis zum Hauptrohr verläuft. Das gebäudeseitige Ende der weiteren Datenleitung, welche im Einzelanschluss verlegt ist, wird an ein Endgerät, z.B. eine Datenverarbeitungseinheit, insbesondere einen Computer, oder an eine weitere Datenverteileinheit, insbesondere W-LAN, angeschlossen.

Der wesentliche Vorteil der erfindungsgemäßen Vorrichtung bzw. des erfindungsgemäßen Verfahrens besteht darin, dass die entsprechenden Datenleitungen im Rohrsystem nicht direkt verbunden werden müssen, sondern deren Enden lediglich in einen gewissen Nahebereich gebracht bzw. einander angenähert werden müssen. Damit wird das Verlegen beträchtlich erleichtert, ohne die Übertragungsqualität zu vermindern.

An dem Ende der Datenleitung, welche von der zentralen Datenverteilereinheit bis zur Einmündung des Einzelanschlusses in das Hauptrohr verläuft, und an dem Ende der weiteren Datenleitung, welche im Einzelanschluss verläuft, welche Enden sich beide im Hauptrohr befinden, sind entweder Sende-Empfangsantennen vorgesehen oder die Enden der Datenleitungen sind als Sende- Empfangsantennen ausgebildet. Dadurch wird erreicht, dass das Verlegen der Datenleitungen im Rohrsystem nicht durch die Notwendigkeit der Erstellung eines Anschlusses bzw. einer Abzweigung im Einmündungsbereich von Abzweigrohren verkompliziert wird.

Gemäß Anspruch 2 werden mit den im Nahebereich der Einmündung des Einzelanschlusses in das Hauptrohr angeordneten Antennenpaar in diesem Bereich Daten zwischen den beiden Antennen übertragen werden, was den Vorteil hat, dass der Weg, welcher mittels Funkstrecke überbrückt werden muss, gering bleibt und Verluste minimiert werden. In der Praxis ist es von Vorteil, wenn das Antennenpaar nicht weiter als einen Rohrdurchmesser des Einzelanschlusses von der Einmündung des Einzelanschlusses in das Hauptrohr entfernt angeordnet wird.

Gemäß Anspruch 3 ist es für die Datenübertragung vorteilhaft und kostengünstig, an dem Ende der Datenleitung bzw. der weiteren Datenleitung über einen bestimmten Bereich die Schirmung zu entfernen, und den, insbesondere einzigen, Innenleiter, insbesondere abisoliert, im Bereich bzw. vor der Einmündung des Einzelanschlusses im Hauptrohr zu positionieren. Besonders eignen sich gemäß Anspruch 4 hierfür Koaxialkabel mit einem Innenleiter. Zwischen den beiden Antennen ist eine Funkstrecke ausgebildet, über die Daten einfach und sicher übertragen werden können, ohne dass das Problem des Verlegens und Verbindens der Datenleitung im Einmündungsbereich des Einzelanschlusses bestünde.

Gemäß Anspruch 5 ist vorteilhaft, dass zum Senden auf einer bestimmten Frequenz für die Sende-Empfangsantennen dieselben Abmessungen bzw. dieselbe Form vorgesehen wird.

Gemäß den Ansprüchen 6 und 14 ist es für die Datenübertragung von Vorteil, wenn die Antennen der Antennenpaare parallel ausgerichtet sind, womit die Kanaldämpfung reduziert, die Empfangsleistung erhöht und höhere Datendurchsatzraten ermöglicht werden.

Ein weiteres Problem, welches auftritt, wenn zwei Einzelanschlüsse einander nahe liegen, nämlich dass die jeweiligen Sende- bzw. Empfangsbereiche sich überlappen, wird erfindungsgemäß mit den Merkmalen der Ansprüche 7 und 15 gelöst.

Um den Datendurchsatz zwischen der zentralen Datenverteilereinheit und den an einem Einzelanschlusses vorgesehenen Endgerät zu erhöhen, können die Merkmale der Ansprüche 8 und 16 vorgesehen werden. Um zu verhindern, dass sich die Sende- bzw. Empfangsbereiche der einzelnen Antennen überlappen, kann im Bereich der Einmündung des Einzelanschlusses für die Kommunikation jedes Antennenpaares eine eigene Frequenz bzw. ein eigenes Protokoll vorgesehen werden.

Um zu verhindern, dass es auf Grund einer großen Anzahl von Datenleitungen zu Verstopfungen im Hauptrohr bzw. zu Verschlingungen der Datenleitungen innerhalb des Rohrleitungssystems kommt, dienen die Merkmale der Ansprüche 9 und 10. Dieser Kabelkanal kann mit Öffnungen versehen sein, sodass einzelne Datenleitungen an der gewünschten Stelle vor einem Einzelanschluss aus dem Kabelkanal herausgeführt werden können. Üblicherweise wird der Kabelkanal im obersten Bereich des Querschnitts des Hauptrohres befestigt, was den Vorteil hat, dass die Störung des Abflusses der Abwässer möglichst gering gehalten wird.

Anspruch 11 bringt den Vorteil, dass das Positionieren der Enden der Datenleitungen erleichtert wird.

Sofern gemäß Anspruch 12 die Datenverarbeitungseinheit, welche am gebäudeseitigen Endbereich eines Einzelanschlusses angeschlossen ist, eine Verteileinheit für kabellose Datenübertragung, insbesondere ein Router für W-LAN ist, ergibt sich der Vorteil, dass jene Räume eines Gebäudes, welche mit einem Abwasseranschluss ausgestattet sind bzw. einen Einzelanschluss besitzen und üblicherweise nur schwer bzw. unter großem Aufwand mit Datenverarbeitungseinheiten verbunden werden können, nunmehr einfach mit Kommunikationsgeräten ausgerüstet werden können. Auch in dem Fall, in dem sich abgehende Einzelanschlüsse in Form von Abwasser- bzw. Fäkalienrohren besitzende Sanitäreinheiten unmittelbar neben den Räumlichkeiten befinden, in welchen sich Datenverarbeitungseinheiten befinden, ist es von Vorteil, die Distanz zwischen der Sanitäreinheit und der Datenverarbeitungseinheit mittels Funk zu überbrücken. Dies stellt insofern kein Problem dar, als in Sanitäreinrichtungen üblicherweise elektrischer Strom zur Verfügung steht.

Gemäß Anspruch 13 wird mindestens eine Datenleitung, und zwar vorteilhafterweise für jeden Einzelanschluss eine eigene Datenleitung, welche mit einer zentralen Datenverteilereinheiten verbunden ist, in das Hauptrohr eingebracht. Das Ende der jeweiligen Datenleitung, welches der zentralen Datenverteilereinheit fern ist, ist entweder als Sende-Empfangsantenne ausgebildet oder mit einer Sende- und Empfangsantenne versehen. Des weiteren wird von dem gebäudeseitigen Ende eines Einzelanschlusses aus eine weitere Datenleitung über diesen Einzelanschluss in das Rohrleitungs- bzw. Abwassersystem, insbesondere bis zum bzw. ins Hauptrohr, eingebracht. Ein Vorteil gegenüber konventionellen Verfahren ist, dass keine durchgehende Datenleitung verlegt werden muss, wodurch neben erheblichem Aufwand, welcher zur Einführung der Datenleitung erforderlich ist, auch eine Verschlingung und eine damit einhergehende Verstopfung des Rohres vermieden werden kann. Es sind lediglich Datenleitungen bzw. Kabel in das Hauptrohr bzw. in den Einzelanschluss einzubringen. Beim Verlegen der Datenleitungen sollte zur Erreichung einer entsprechenden Übertragungsqualität darauf geachtet werden, dass die Antennen, welche sich im Endbereich der Datenleitung und der weiteren Datenleitung befinden, parallel oder zumindest annähernd parallel ausgerichtet werden bzw. einen entsprechenden gegenseitigen Abstand besitzen. Es ist möglich, die Enden der Datenleitungen 4 bzw. 6 bzw. die Antennen der Antennenpaare ins Hauptrohr zu fixieren z.B. mit einem Verlegeroboter an der Kanalwand anzuschrauben.

Wenn, wie gemäß Anspruch 17 vorgesehen, die Datenleitungen mittels eines ferngesteuerten Roboters in den Rohren in Position gebracht werden, können auch Rohre mit kleinen Durchmessern zur Aufnahme von Datenleitungen verwendet werden, die für Menschen unzugänglich sind.

Gemäß den Ansprüchen 11 und 19 wird erreicht, dass die Datenleitung frei verlegt bzw. an beliebigen Stellen im Einmündungsbereich positioniert werden kann, wodurch die Übertragungsqualität optimiert und die Sende/Empfangsraten erhöht werden können.

Die Länge der Datenleitung bzw. der weiteren Datenleitung ist so zu bemessen, dass die Enden der Datenleitung in einer Position angeordnet werden, in der sie optimal zusammenwirken bzw. in der sich eine maximale Datenübertragungsrate bzw. eine minimale Kanaldämpfung ergibt. Prinzipiell wird darauf geachtet, dass die Enden der beiden Datenleitungen möglichst nahe zueinander liegen.

Eine einfache Implementierung der Datenleitungen wird gemäß Anspruch 20 erreicht, womit der Vorteil erreicht wird, dass die Datenleitungen automatisch durch Ziehen in Position gebracht werden können.
Fig. 1 zeigt die üblicherweise vorhandene Verrohrung eines Gebäudeabwassersystems.
Fig. 2 zeigt eine schematische Gesamtdarstellung eines erfindungsgemäßen Netzwerkes zur Übertragung von Daten, mit in die Verrohrung, welche in Fig. 1 dargestellt ist, eingebrachten Datenleitungen.
Fig. 3 zeigt den Einmündungsbereich eines Einzelanschlusses bzw. Abzweigrohres in ein Hauptrohr.

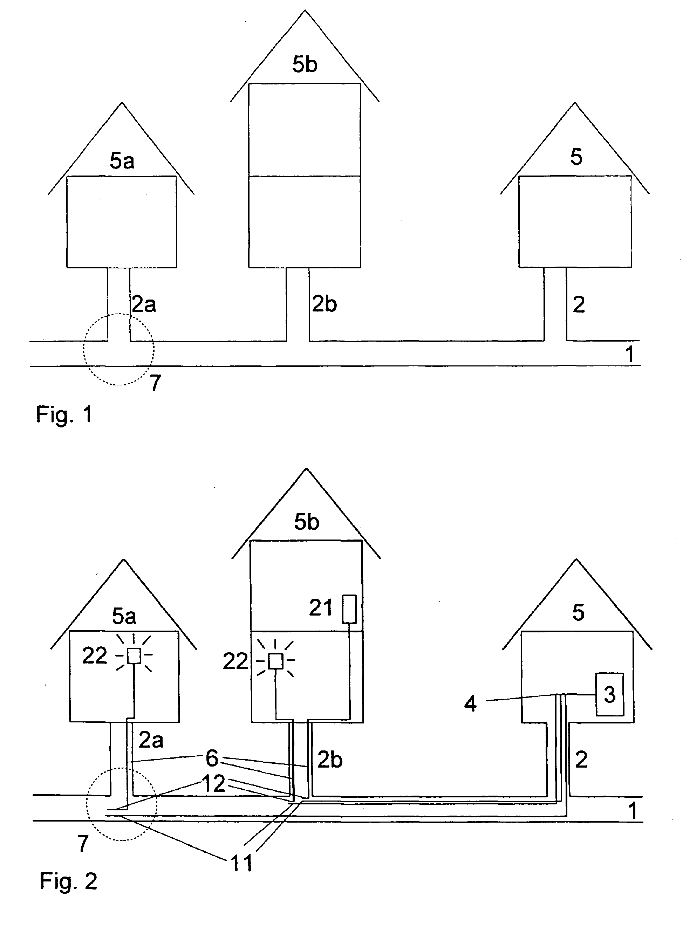

In Fig. 1 ist eine Mehrzahl von Gebäuden 5a, 5b dargestellt, welche jeweils mit einem Einzelanschluss 2a, 2b eines Abwasserleitungssystems versehen sind. Die Einzelanschlüsse 2a bzw. 2b münden in ein Hauptrohr 1 ein. Über den Einzelanschluss 2 ist ein weiteres Gebäude 5 an das Hauptrohr 1 angeschlossen.

Fig. 2 zeigt das erfindungsgemäße Netzwerk umfassend Abwasserleitsystem und die Verkabelung zur Übertragung von Daten, insbesondere die im Hauptrohr 1 und in den Einzelanschlüssen 2a, 2b verlegten Datenleitungen 4 bzw. 6. Fig. 2 zeigt drei, im Hauptrohr 1 verlegte elektrische Datenleitungen 4 und eine im Gebäude 5 untergebrachte zentrale Datenverteilereinheit 3. Vorgesehen ist, dass mindestens eine Datenleitung 4 in das Hauptrohr 1 eingebracht und mit ihrem einem Ende an der Datenverteilereinheit 3 angeschlossen ist. Ihr anderes Ende ist als Sende- bzw. Empfangsantenne 11 ausgebildet oder weist eine angebrachte Sende- bzw. Empfangsantenne 11 auf. Weitere Datenleitungen 6 sind über die Einzelanschlüsse 2a, 2b in das Hauptrohr 1 eingebracht. Diese sind an ihrem einen Ende an ein in dem jeweiligen Gebäude 2a, 2b befindliches Endgerät 21 angeschlossen. Die davon abgehenden weiteren Datenleitungen 6 sind in die Einzelanschlüsse 2a eingebracht und das jeweils andere Ende der weiteren Datenleitung 6 ist als Sende- bzw. Empfangsantenne 12 ausgebildet oder ist mit einer Sende- bzw. Empfangsantenne 12 versehen und befindet sich im Bereich 7 der Einmündung des Einzelanschlusses 2 in das Hauptrohr 1. Die am Ende der Datenleitung 4 vorgesehene Sende- bzw. Empfangsantenne 11 oder das als Antenne 12 fungierende Ende der Datenleitung 4 sowie die Sende- bzw. Empfangsantenne am Ende der weiteren Datenleitung 6 oder das Ende der weiteren Datenleitung 6, welches als Antenne 12 fungiert, bilden ein Antennenpaar, wobei zwischen diesen Antennen 11, 12 eine Funkstrecke errichtet bzw. ausgebildet ist. Die zu übertragenden Daten werden von der Datenverteilereinheit 3 bzw. den Endgeräten 21 in die Datenleitung 6 und in die weiteren Datenleitungen (4) eingespeist bzw. über diese empfangen.

An Stelle eines Endgerätes 21 oder zusätzlich dazu kann eine weitere Verteilereinheit 22 vorgesehen sein, welche die Daten, welche über die zentrale Datenverteilereinheit 3 zum Einzelanschluss gelangen, drahtlos in seinem Nahebereich weiterverteilt, wobei diese Daten von im Nahebereich befindlichen weiteren Geräten empfangen bzw. zu der weiteren Verteilereinheiten gesendet werden können.

Die zentrale Datenverteilereinheit 3 befindet sich im Gebäude 5 und ist an alle Datenleitungen 4 angeschlossen und steuert die Kommunikation.

Die von der Datenverteilereinheit 3 abgehenden Datenleitungen 4 verlaufen im Hauptrohr 1 in Richtung des Bereichs 7 der Einmündungen der von den Gebäuden 5a, 5b kommenden Einzelanschlüsse 2a, 2b. Gemäß Fig. 2 sind zwei Datenleitungen 4 für die Versorgung des Gebäudes 5b vorgesehen, wobei die Länge des eingebrachten Teiles der jeweiligen Datenleitung 4 so zu bemessen und diese Datenleitung soweit in das Hauptrohr 1 einzubringen ist, dass das Ende, welches der zentralen Datenverteileinheit 3 fern ist, im Bereich der Einmündung 7 des Einzelanschlusses 2a positioniert ist.

Ein Ende einer weiteren Datenleitung 4, die von der Datenverteilereinheit 3 abgeht, befindet sich analog im Einmündungsbereich 7 des Einzelanschlusses 2a. Von den Gebäuden 5a bzw. 5b werden eine bzw. zwei weitere Datenleitungen 6 in die Einzelanschlüsse 2a, 2b eingebracht und so positioniert, dass sie sich im Bereich 7 der Einmündung des jeweiligen Einzelanschlusses 2a, 2b in das Hauptrohr 1 befinden. Die Verlegung bzw. das Einbringen der Datenleitungen 4 bzw. 6 erfolgt z.B. mit Verlegerobotern, durch Einspülen oder Einblasen oder anderen bekannten Verfahren.

Zur Führung der Datenleitungen 4, welche von der zentralen Datenverteilereinheit abgehen, kann ein Kabelkanal 15 vorgesehen werden. Ein derartiger Kabelkanal 15 wird üblicherweise vor der Verlegung der Datenleitungen 4 in das Hauptrohr 1 über den Serviceschacht 2 des Gebäudes 5 mit der zentralen Datenverteilereinheit 3 eingebracht. Das Verlegen des Kabelkanals erfolgt je nach Größe bzw. Durchmesser des Hauptrohres 1 sowie des Einzelanschlusses 2, welcher vorzugsweise als Schacht ausgebildet ist, entweder von Hand oder bei kleinen Rohrdurchmessern durch ferngesteuerte Roboter. Der Kabelkanal 15 wird dabei üblicherweise im oberen Endbereichs des Rohres 1 bzw. Schachtes angeschraubt, da dies den Fluss der Abwässer am wenigsten behindert.

Von Vorteil ist eine Verlegung derart, dass die Länge der in das Rohrleitungssystem eingebrachten Datenleitung 4 sowie der weiteren Datenleitung 6, ausgehend von einem festgelegten, vorzugsweise sich außerhalb des Rohrleitungssystems befindlichen Bezugspunkt, variiert wird und die Verlegeposition der Datenleitungen 4, 6 dann festgelegt bzw. als entsprechend bewertet wird, wenn ein weiteres Einbringen oder Herausziehen der Datenleitung 4 und/oder der weiteren Datenleitung 6 eine Verschlechterung der Datenübertragungsrate und/oder eine Erhöhung der Kanaldämpfung ergibt.

Die Befestigung des Kabelkanals 15 am Hauptrohr 1, allenfalls auch in einem Einzelanschluss 2, erfolgt vorteilhafterweise mit Schrauben und Dübel, welche den Halt des Kabelkanals 15 im oberen Bereich des Hauptrohres 1 gewährleisten.

Für die Konstruktion der Antennen 11, 12 ergeben sich gemäß der Erfindung zwei unterschiedliche Möglichkeiten. Die erste kostengünstige Möglichkeit besteht darin, dass die Datenleitung 4 sowie die weitere Datenleitung 6 als Koaxialkabel ausgebildet sind, welches aus einem Innenleiter und der Schirmung besteht und über eine Strecke, welche einer typischen Antennenlänge für die vorgegebene Funkfrequenz entspricht, die Schirmung vom Kabel abgenommen wird, sodass der Innenleiter ungeschirmt, vorzugsweise isoliert, im Bereich 7 der Einmündung des Einzelanschlusses 2 in das Hauptrohr 1, zu liegen kommt. Als weitere Möglichkeit kann vorgesehen werden, dass am Ende der Datenleitung 4 eine Antenne entsprechender Abmessungen angeschlossen wird.

Es ist zweckmäßig, wenn die beiden Antennen 11, 12 des jeweiligen Antennenpaares dieselbe Form und dieselben Abmessungen haben sowie parallel ausgerichtet sind.

Für die Kommunikation im Falle mehrerer Antennenpaare mit Antennen 11, 12, wobei sich die Wirkungsbereiche der jeweiligen Antennenpaare überlappen, kann vorgesehen werden, dass für unterschiedliche Antennenpaare unterschiedliche Frequenzen bzw. Protokolle für die Datenübertragung verwendet werden. Um die Datenübertragungsrate zu erhöhen, kann vorgesehen werden, dass mehrere Antennenpaare sich im Einmündungsbereich 7 eines Einzelanschlusses 2b befinden und für die Kommunikation der einzelnen Antennenpaare unterschiedliche Frequenzen und Protokolle vorgesehen sind.

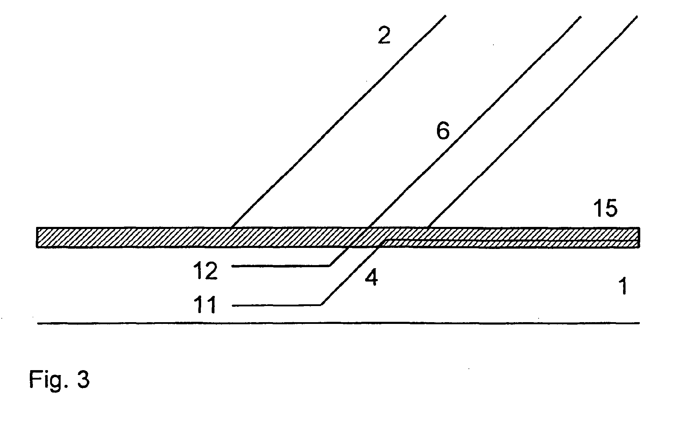

In Fig. 3 wird der Nahbereich 7 der Einmündung eines Einzelanschlusses 2 in das Hauptrohr 1 dargestellt. Die an die zentrale Datenverteilerseinheit 3 angeschlossene Datenleitung 4 ist im Nahbereich 7 der Einmündung aus dem Kabelkanal 15 herausgeführt und ist an diesem herausgeführten Ende als Antenne 11 ausgebildet, insbesondere abisoliert. Auch das weitere Datenkabel 6, welches über den Einzelanschluss 2 des Gebäudes 5 geführt wird, ist an seinem, gebäudefernen Ende als Antenne 12 ausgebildet, insbesondere abisoliert.

An Stelle eines Abwasserrohrsystems ist es selbstverständlich möglich, weitere Rohrsysteme im Bereich von Gebäuden 5 zu verwenden, welche mit Einzelanschlüssen 2 sowie mit einem gemeinsamen Rohr 1 ausgestattet sind. Insbesondere Klimaanlagen verfügen über ein Rohrsystem mit einem luftführenden Hauptrohr und abzweigenden Anschlussleitungen bzw. luftführenden Abzweigrohren, welches analog zu einem Abwasserrohrsystem zum Verlegen von Datenleitungen 4, 6 herangezogen werden kann.

Die Datenverteilereinheit 3 und die Endgeräte 21 besitzen die entsprechende elektrische und/oder elektronische Ausrüstung und Funktion, um Daten entsprechend in die Datenleitungen einzuspeisen und an den Antennen abzusenden bzw. bei der Antenne einlangende Funksignale entsprechend aufnehmen und auswerten zu können.

## Patentansprüche

1. Netzwerk zur Übertragung von Daten, umfassend ein Rohrleitungssystem, insbesondere ein Abwasserleitungssystem, mit einem Hauptrohr (1), zumindest einem in das Hauptrohr (1) einmündenden, insbesondere zu einem Gebäude (5) führenden, einen Einzelanschluss (2, 2a, 2b) darstellenden Abzweigrohr, zumindest einer im Hauptrohr (1) und zumindest einer in dem Einzelanschluss (2) verlegten elektrischen Datenleitung (4), zumindest einer zentralen Datenverteilereinheit (3) und zumindest einem Endgerät (21), wobei
in das Hauptrohr (1) zumindest eine Datenleitung (4) eingebracht ist, die mit ihrem einen Ende an der, insbesondere außerhalb des Rohrleitungssystems befindlichen, Datenverteilereinheit (3) angeschlossen ist, **dadurch gekennzeichnet, dass** ihr anderes im Rohrleitungssystem verlegtes Ende als Sende- bzw. Empfangsantenne (11) ausgebildet ist oder eine Sende- bzw. Empfangsantenne (11) aufweist,
- dass mindestens eine weitere Datenleitung (6) über den Einzelanschluss (2) in das Rohrleitungssystem eingebracht ist, welche mit ihrem einen Ende mit dem, insbesondere außerhalb des Rohrleitungssystems befindlichen, Endgerät (21) verbunden ist und deren anderes Ende als Sende- bzw. Empfangsantenne (12) ausgebildet ist oder eine Sende- bzw. Empfangsantenne (12) aufweist, und
- dass die Sende- bzw. Empfangsantenne (11) oder das als Antenne (11) fungierende Ende der Datenleitung (4) sowie die Sende- bzw. Empfangsantenne (12) oder das als Antenne (12) fungierende Ende der weiteren Datenleitung (6) ein Antennenpaar bilden, zwischen dessen Antennen (11, 12) eine Funkstrecke besteht bzw. ausgebildet ist.

2. Netzwerk gemäß Anspruch 1, **dadurch gekennzeichnet, dass** die Antennen (11, 12) bzw. die als Antenne (11, 12) fungierenden Enden der Datenleitungen (4, 6) eines Antennenpaares im Bereich (7) bzw. vor der Einmündung des Einzelanschlusses (2) in das Hauptrohr (1) angeordnet sind.

3. Netzwerk gemäß Anspruch 1 oder 2, **dadurch gekennzeichnet, dass** die Datenleitung (4) bzw. die weitere Datenleitung (6) geschirmt sind, wobei an dem als Antenne (11, 12) fungierenden bzw. ausgebildeten Ende der Datenleitung (4) bzw. der weiteren Datenleitung (6) mindestens ein Leiter ungeschirmt aus der Schirmung hervorragt.

4. Netzwerk gemäß einem der Ansprüche 1 bis 3, **dadurch gekennzeichnet, dass** die Datenleitung (4) bzw. die weitere Datenleitung (6) als Koaxialkabel, insbesondere mit einem einzigen Innenleiter, ausgebildet sind.

5. Netzwerk gemäß einem der Ansprüche 1 bis 4, **dadurch gekennzeichnet, dass** die beiden Antennen (11, 12) eines jeweiligen Antennenpaares dieselbe Form und/oder dieselben Abmessungen haben.

6. Netzwerk gemäß einem der Ansprüche 1 bis 5, **dadurch gekennzeichnet, dass** die Antennen (11, 12) eines Antennenpaares parallel ausgerichtet sind.

7. Netzwerk gemäß einem der Ansprüche 1 bis 6, **dadurch gekennzeichnet, dass** für die Kommunikation im Falle mehrerer im Rohrleitungssystem, insbesondere aufeinanderfolgenden Einzelanschlüssen (2), vorgesehener Antennenpaare, deren Sende/Empfangsbereiche überlappen, für die einzelnen Antennenpaare für die Datenübertragung unterschiedliche Frequenzen und/oder Protokolle vorgesehen sind.

8. Netzwerk gemäß einem der Ansprüche 1 bis 7, **dadurch gekennzeichnet, dass** bei einem Einzelanschluss mehrere Antennenpaare vorgesehen sind, und für die Datenübertragung für jedes Antennenpaar unterschiedliche Frequenzen und/oder Protokolle vorgesehen sind.

9. Netzwerk gemäß einem der Ansprüche 1 bis 8, **dadurch gekennzeichnet, dass** die Datenleitung (4) in einem Kabelkanal (15) im Hauptrohr (1) verlegt ist.

10. Netzwerk gemäß Anspruch 9, **dadurch gekennzeichnet, dass** der Kabelkanal (15) im obersten Bereich des Rohrquerschnittes des Hauptrohres (1) befestigt, vorzugsweise angeschraubt, und die Datenleitung (4) aus diesem Kabelkanal (15), insbesondere im Nahebereich der Einmündung (7) des Einzelanschlusses (2) in das Hauptrohr (1), herausgeführt ist.

11. Netzwerk gemäß einem der Ansprüche 1 bis 10, **dadurch gekennzeichnet, dass** das als Antenne (11) ausgebildete Ende oder die am Ende vorgesehene Antenne (11) der Datenleitung (4) im Nahbereich der Einmündung (7), insbesondere im Nahbereich des als Antenne (12) ausgebildeten Endes (12) der weiteren Datenleitung (6) oder der am Ende der weiteren Datenleitung (6) vorgesehenen Antenne (12) angeordnet ist, und/oder dass die weitere Datenleitung (6) mit ihrem eine Antenne (11) aufweisenden oder ihrem als Antenne (11) ausgebildeten Ende, dem Ende der Datenleitung (4) gegenüberliegt und aus dem Ende des Einzelanschlusses (2) herausragt bzw. herausgeführt ist.

12. Netzwerk gemäß einem der Ansprüche 1 bis 11, **dadurch gekennzeichnet, dass** an dem dem Hauptrohr (1) fernen Ende der weiteren Datenleitung (6) das Endgerät (21) und/oder eine Verteileinheit (22), vorzugsweise für drahtlose Datenübertragung, insbesondere ein Router für WLAN, angeschlossen sind und dass gegebenenfalls im Sendebereich dieser weiteren Verteileinheit (22) weitere Endgeräte, insbesondere Computer, vorgesehen sind, welche mit Vorrichtungen zur drahtlosen Datenübertragung ausgestattet sind.

13. Verfahren zur Übertragung von Daten in einem Netzwerk umfassend ein Rohrleitungssystem, insbesondere ein Abwasserleitungssystem, mit einem Hauptrohr (1) und zumindest einem in das Hauptrohr (1) einmündenden, insbesondere zu einem Gebäude (5a, 5b) führenden, einen Einzelanschluss (2, 2a, 2b) darstellenden Abzweigrohr, wobei
mindestens eine Datenleitung (4) in das Hauptrohr (1) eingebracht und mit ihrem einem Ende an eine Datenverteilereinheit (3) angeschlossen wird, **dadurch gekennzeichnet,**
- **dass** ihr anderes Ende als Sende- bzw. Empfangsantenne (11) ausgebildet oder mit einer Sende- bzw. Empfangsantenne (11) versehen wird,
- **dass** mindestens eine weitere Datenleitung (6) über den Einzelanschluss (2, 2a, 2b) in das Rohrleitungssystem bzw. in das Hauptrohr (1) eingebracht wird und mit ihrem einen Ende mit einem, vorzugsweise außerhalb des Hauptrohres (4) angeordnetem, Endgerät (21) verbunden wird und an ihrem anderen Ende als Sende- bzw. Empfangsantenne (12) ausgebildet oder mit einer Sende- bzw. Empfangsantenne (12) versehen wird und
- **dass** Daten zwischen dem von der Sende- bzw. Empfangsantenne (11) oder als Antenne (11) fungierende Ende der Datenleitung (4) und dem von der Sende- bzw.
Empfangsantenne (12) oder als Antenne (12) fungierende Ende der weiteren Datenleitung (6) gebildeten Antennenpaar mittels Funk übertragen werden.

14. Verfahren nach Anspruch 13, **dadurch gekennzeichnet, dass** die Antennen (11, 12) eines Antennenpaares, insbesondere im Bereich (7) bzw. vor der Einmündung des Einzelanschlusses (2) in das Hauptrohr (1), zur Optimierung der Datenübertragung bezüglich ihrer gegenseitigen Lage, insbesondere parallel zueinander, ausgerichtet werden.

15. Verfahren gemäß Anspruch 13 oder 14, **dadurch gekennzeichnet, dass** die Kommunikation zwischen den Antennen (11, 12) von Antennenpaaren von Einzelanschlüssen (2a, 2b), welche Einzelanschlüsse (2a, 2b) gegenseitig im jeweiligen Sende/Empfangsbereich ihrer Antennen (11, 12) liegen, mit unterschiedlichen Frequenzen und/oder Protokollen erfolgt.

16. Verfahren gemäß einem der Ansprüche 13 bis 15, **dadurch gekennzeichnet, dass** einem Einzelanschluss (2) mehrere Antennenpaare zugeordnet werden und für die Kommunikation in jedem diesem Einzelanschluss (2) zugeordneten Antennepaar unterschiedliche Frequenzen und/oder Protokolle verwendet werden.

17. Verfahren gemäß einem der Ansprüche 13 bis 16, **dadurch gekennzeichnet, dass** die Datenleitung (4) sowie die weitere Datenleitung (6) im Hauptrohr (1) und/oder im Einzelanschluss (2, 2a, 2b) und/oder im Bereich (7) der Einmündung des Einzelanschlusses (2) in das Hauptrohr (1) mittels eines ferngesteuerten Roboters in Position gebracht werden.

18. Verfahren gemäß einem der Ansprüche 13 bis 17, **dadurch gekennzeichnet, dass** ein als Antenne (11) fungierender oder die Antenne (11) aufweisender Endbereich der Datenleitung (4) aus einem die Datenleitung (4) führenden Kabelkanal (15) herausgeführt bzw. herangezogen wird und ihr Ende vor einem Einzelanschluss (2) positioniert wird.

19. Verfahren nach einem der Ansprüche 13 bis 18, **dadurch gekennzeichnet, dass** die Antennen (11, 12) der Antennenpaare in einer gegenseitigen Lage positioniert werden, in welcher sich eine maximale Datenübertragungsrate und/oder eine minimale Kanaldämpfung ergibt.

20. Verfahren nach einem der Ansprüche 13 bis 19, **dadurch gekennzeichnet, dass** die Länge der in das Rohrleitungssystem eingebrachten Datenleitung (4) sowie der weiteren Datenleitung (6), ausgehend von einem festgelegten, vorzugsweise sich außerhalb des Rohrleitungssystems befindlichen Bezugspunkt, variiert wird und die Länge bzw. Verlegeposition der Datenleitungen (4, 6) dann festgelegt wird, wenn ein weiteres Einbringen oder Herausziehen der Datenleitung (4) und/oder der weiteren Datenleitung (6) eine Verschlechterung der Datenübertragungsrate und/oder eine Erhöhung der Kanaldämpfung ergibt.

21. Verfahren nach einem der Ansprüche 13 bis 20. **dadurch gekennzeichnet, dass** das Antennenpaar im Hauptrohr (1) strömungsabwärts der Einmündung des Einzelanschlusses bzw. Abzweigrohres (2a, 2b) angeordnet wird, vorzugsweise in einem Abstand, der kleiner als der Durchmesser des Abzweigrohrs ist.

## Claims

1. A network for transmitting data comprising a system of pipes, particularly a sewage water conducting system, including a main pipe (1), at least one branching pipe, which discharges into said main pipe (1), particularly leading to a building (5), and constitutes an individual branch connection (2, 2a, 2b), at least one electrical data line (4) each installed within the main pipe (1) and within said individual branch connection respectively (2), at least one central data distribution unit (3) and at least one terminal (21), wherein at least one data line (4) is introduced into said main pipe (1) and one end of which is connected to said data distribution unit (3), that in particular is situated outside said system of pipes, **characterised in**
- **that** its other end, installed within the system of pipes, is formed as a transmitting or receiving antenna respectively (11) or comprises a transmitting or receiving antenna respectively (11),
- **that** at least one further data line (6) is introduced into said system of pipes via said individual branch connection (2), one end of which being connected to said terminal (21), which in particular is situated outsides said system of pipes, and its other end is formed as a transmitting or receiving antenna respectively (12) or comprises a transmitting or receiving antenna respectively (12), and
- **that** said transmitting or receiving antenna respectively (11) or that end of the data line (4) which functions as an antenna respectively (11), as well said transmitting or receiving antenna respectively (12) or that end of the further data line, which functions as an antenna respectively (12), form a pair of antennas, a radio link existing or being formed between the antennas (11, 12) thereof.

2. Network according to claim 1, **characterised in that** the antennas (11, 12) or the ends of the data lines (4, 6), which function as an antenna (11, 12), of a pair of antennas are arranged in the region (7) of or before the discharge of said individual branch connection (2) into said main pipe (1).

3. Network according to claim 1 or 2, **characterised in that** the data line (4) or the further data line (6) are shielded, wherein at least one conductor protrudes unshielded from the shielding at that end of the data line (4) or of the further data line (6), which functions or is formed as an antenna (11, 12).

4. Network according to any of claims 1 to 3, **characterised in that** the data line (4) or the further data line (6) are formed as a coaxial cable, particularly having a single internal conductor.

5. Network according to any of claims 1 to 4, **characterised in that** the two antennas (11, 12) of a respective pair of antennas have the same shape and/or the same dimensions.

6. Network according to any of claims 1 to 5, **characterised in that** the antennas (11, 12) of a pair of antennas are oriented in parallel.

7. Network according to any of claims 1 to 6, **characterised in that** in the case of a plurality of pairs of antennas provided in the system of pipes, particularly in successive individual branch connections (2), with overlapping transmission/reception ranges, different frequencies and/or protocols are provided for the individual pairs of antennas for communicating and transmitting data.

8. Network according to any of claims 1 to 7, **characterised in that** a plurality of pairs of antennas are provided at an individual branch connection, and different frequencies and/or protocols are provided for each pair of antennas for transmitting data.

9. Network according to any of claims 1 to 8, **characterised in that** the data line (4) is installed in a cable channel (15) within said main pipe (1).

10. Network according to claim 9, **characterised in that** said cable channel (15) is attached, preferably screwed, at the uppermost region of the pipe cross-section of the main pipe (1), and the data line (4) is led out of this cable channel (15), particularly in proximity of the discharge (7) of said individual branch connection (2) into said main pipe (1).

11. Network according to any of claims 1 to 10, **characterised in that** the end formed as an antenna (11) or the antenna (11) provided at the end of the data line (4) is arranged in proximity of the discharge (7), particularly in proximity of that end (12) of the further data line (6) which is formed as an antenna (12) or of the antenna (12) provided at the end of the further data line (6), and/or that the further data line (6) with its end having an antenna (12) or its end formed as an antenna (12), faces the end of the data line (4) and protrudes or is led out from the end of said individual branch connection (2).

12. Network according to any of claims 1 to 11, **characterised in that** at that end of the further data line (6) which is remote from the main pipe (1), the terminal (21) and/or a distribution unit (22), preferably for wire-less data transmission, particularly a router for WLAN, is (are) connected, and that optionally further terminals, particularly computers, are provided within the transmission range of this further distribution unit (22) and are equipped with devices for wire-less data transmission.

13. A method for transmitting data in a network comprising a system of pipes, particularly a sewage water conducting system, including a main pipe (1), at least one branching pipe, which discharges into said main pipe (1), particularly leading to a building (5a, 5b), and constitutes an individual branch connection (2, 2a, 2b), wherein at least one data line (4) is introduced into said main pipe (1) and one end of which is connected to said data distribution unit (3), **characterised in**
- **that** its other end is formed as a transmitting or receiving antenna respectively (11) or is provided with a transmitting or receiving antenna respectively (11),
- **that** at least one further data line (6) is introduced into said system of pipes or into said main pipe (1) via said individual branch connection (2, 2a, 2b), one end of which being connected to said terminal (21), which in particular is situated outsides said main pipe (1), and its other end is formed as a transmitting or receiving antenna respectively (12) or is provided with a transmitting or receiving antenna respectively (12), and
- **that** data are radio transmitted between the pair of antennas which is formed by the transmitting or receiving antenna respectively (11) or that end of the data line (4), which functions as an antenna (11) and the transmitting or receiving antenna respectively (12) or that end of the further data line (6), which functions as an antenna (12).

14. Method according to claim 13, **characterised in that** the antennas (11, 12) of a pair of antennas are oriented with respect to their mutual positions for optimising data transmission, particularly in parallel to each other, particularly within the region (7) or before the discharge of said individual branch connection (2) into the main pipe (1).

15. Method according to claim 13 or 14, **characterised in that** the communication between the antennas (11, 12) of pairs of antennas of individual branch connections (2a, 2b), said individual branch connections (2a, 2b) being mutually situated in the respective transmission/reception range of their antennas (11, 12), is effected using different frequencies and/or protocols.

16. Method according to any of claims 13 to 15, **characterised in that** a plurality of pairs of antennas are associated to an individual branch connection (2) and, for communication in each pair of antennas assigned to this individual branch connection (2), different frequencies and/or protocols are used.

17. Method according to any of claims 13 to 16, **characterised in that** the data line (4) as well as the further data line (6) are positioned by means of a remotely controlled robot within the main pipe (1) and/or in the individual branch connection (2, 2a, 2b) and/or within the region (7) of the discharge of said individual branch connection (2) into said main pipe (1).

18. Method according to any of claims 13 to 17, **characterised in that** an end region of said data line (4), which functions as an antenna (11) or includes the antenna (11) is led out or drawn on so of a cable channel (15), which comprises said data line (4), and its end is positioned before an individual branch connection (2).

19. Method according to any of claims 13 to 18, **characterised in that** the antennas (11, 12) of the pairs of antennas are positioned in a mutual position, in which a maximum data transmission rate and/or minimum channel attenuation will result.

20. Method according to any of claims 13 to 19, **characterised in that** the length of the data line (4), introduced into the system of pipes, as well as of the further data line (6), starting from a predetermined point of reference, preferably situated outside the system of pipes, is varied, and the length or the position of installation of the data lines (4, 6) is determined so, if a further introduction or further drawing out so of the data line (4) and/or the further data line (6) results in worsening the data transmission rate and/or in an increase of channel attenuation.

21. Method according to any of claims 13 to 20, **characterised in that** the pair of antennas in the main pipe (1) is arranged downstream of the discharge of said individual branch connection or branch connection (2a, 2b), preferably in a distance smaller than the diameter of said branch connection.

## Revendications

1. Réseau de transmission de données, comprenant un système de conduits, particulièrement un système de conduits des eaux d'égout, avec un conduit principal (1), au moins un conduit d'embranchement débouchant dans le conduit principal (1), en particulier conduisant à un bâtiment (5), et formant un conduit individuel de raccordement (2, 2a, 2b), au moins une ligne électrique de données (4) installée dans le conduit principal respectivement dans le conduit individuel de raccordement (2), au moins une unité centrale de distribution des données (3) et au moins un terminal (21), dans lequel au moins une ligne de données (4) est introduite dans le conduit principal (1), dont un bout est raccordé à l'unité de distribution des données (3), qui en particulier est située à l'extérieur du système de conduits,
**caractérisé en ce**
- **que** son autre bout, qui est installé dans le système de conduits, est formé comme une antenne émettrice ou réceptrice (11) ou comprend une antenne émettrice ou réceptrice (11),
- **qu'**au moins une autre ligne de données (6) est introduite dans le système de conduits à travers le conduit individuel de raccordement (2), dont un de ses bouts est raccordé au terminal (21), en particulier situé à l'extérieur du système de conduits, et dont l'autre bout est formé comme une antenne émettrice ou réceptrice (12) ou comprend une antenne émettrice ou réceptrice (12), et
- **que** l'antenne émettrice ou réceptrice (11) ou le bout de la ligne de données (4), qui fonctionne comme une antenne (11), ainsi que l'antenne émettrice ou réceptrice (12) ou le bout de la ligne ultérieure de données (6), qui fonctionne comme une antenne (12), forment une paire d'antennes, entre les antennes (11, 12) de laquelle un trajet radioélectrique existe ou est formé.

2. Réseau selon la revendication 1, **caractérisé en ce, que** les antennes (11, 12) ou les bouts des lignes de données (4, 6), qui fonctionnent comme une antenne (11, 12), d'une paire d'antennes sont disposés dans la zone (7) de ou avant l'embouchure du conduit individuel de raccordement (2) dans le conduit principal (1).

3. Réseau selon la revendication 1 ou 2, **caractérisé en ce, que** la ligne de données (4) ou la ligne ultérieure de données (6) sont blindées, dans lequel au moins une ligne fait saillie du blindage d'une façon non blindée au bout de la ligne de données (4) ou de la ligne ultérieure de données (6), qui fonctionne comme une ou forme une antenne (11, 12).

4. Réseau selon une quelconque des revendications 1 à 3, **caractérisé en ce, que** la ligne de données (4) ou la ligne ultérieure de données (6) sont formées comme un câble coaxial, particulièrement ayant un seul conducteur intérieur.

5. Réseau selon une quelconque des revendications 1 à 4, **caractérisé en ce, que** les deux antennes (11, 12) d'une paire respective d'antennes ont la même forme et/ou les mêmes dimensions.

6. Réseau selon une quelconque des revendications 1 à 5, **caractérisé en ce, que** les antennes (11. 12) d'une paire d'antennes sont parallèlement orientées.

7. Réseau selon une quelconque des revendications 1 à 6, **caractérisé en ce, qu'**en cas de plusieurs paires d'antennes dans le système de conduits, particulièrement des conduits individuel de raccordement (2) successifs, dont les portées d'émission ou de réception chevauchent pour la communication, des fréquences différentes et/ou des protocoles différents sont prévus pour la transmission des données par les paires individuelles d'antennes.

8. Réseau selon une quelconque des revendications 1 à 7, **caractérisé en ce, que** plusieurs paires d'antennes sont prévues chez un conduit individuel de raccordement (2), et des fréquences différentes et/ou des protocoles différents sont prévus pour la transmission des données par chaque paire individuelle d'antennes.

9. Réseau selon une quelconque des revendications 1 à 8, **caractérisé en ce, que** la ligne de données (4) est installée dans une conduite de câbles (15) dans le conduit principal (1).

10. Réseau selon la revendication 9, **caractérisé en ce, que** la conduite de câbles (15) est fixée, de préférence vissée, dans la zone la plus haute de du coupe transversal du conduit du conduit principal (1), et la ligne de données (4) est fait sortir de cette conduite de câbles (15), particulièrement à proximité d'embouchure (7) du conduit individuel de raccordement (2) dans le conduit principal (1).

11. Réseau selon une quelconque des revendications 1 à 10, **caractérisé en ce, que** le bout formé comme une antenne (11) ou l'antenne (11) prévue au bout de la ligne de données (4) est disposé à proximité d'embouchure (7), particulièrement à proximité du bout (12) formé comme une antenne (12), de la ligne ultérieure de données (6) ou de l'antenne (12) prévue au bout de la ligne ultérieure de données (6), et/ou que la ligne ultérieure de données (6) avec son bout présentant une antenne (12) ou formé comme une antenne (12) est en face du bout de la ligne de données (4) et fait saillie ou sortir du bout du conduit individuel de raccordement (2).

12. Réseau selon une quelconque des revendications 1 à 11, **caractérisé en ce, que** le terminal (21) et/ou une unité de distribution (22), de préférence pour une transmission de données sans fil, en particulier un router pour WLAN, est (sont) raccordé(s) à ce bout de la ligne ultérieure de données (6), qui est loin du conduit principal (1), et que, le cas échéant, des terminaux ultérieurs, particulièrement des ordinateurs, sont prévus dans la portée de cette unité ultérieure de distribution (22) et sont équipés des dispositifs pour la transmission sans fil de données.

13. Procédé de transmission de données dans un réseau, comprenant un système de conduits, particulièrement un système de conduits des eaux d'égout, avec un conduit principal (1), au moins un conduit d'embranchement débouchant dans le conduit principal (1), en particulier conduisant à un bâtiment (5a, 5b), et formant un conduit individuel de raccordement (2, 2a, 2b), dans lequel au moins une ligne de données (4) est introduite dans le conduit principal (1) est raccordée à une unité de distribution des données (3) par un de ses bouts, **caractérisé en ce**
- **que** son autre bout est formé comme une antenne émettrice ou réceptrice (11) ou comprend une antenne émettrice ou réceptrice (11),
- **qu'**au moins une autre ligne de données (6) est introduite dans le système de conduits ou dans le conduit principal (1) à travers le conduit individuel de raccordement (2, 2a, 2b), et dont un bout est raccordé au terminal (21), préférablement situé à l'extérieur du conduit principal (1), et dont l'autre bout est formé comme une antenne émettrice ou réceptrice (12) ou est pourvu d'une antenne émettrice ou réceptrice (12), et
- **que** des données sont transmises entre la paire d'antennes formées par l'antenne émettrice ou réceptrice (11) ou par le bout de la ligne de données (4), qui fonctionne comme une antenne (11), et l'antenne émettrice ou réceptrice (12) ou par le bout de la ligne ultérieure de données (6), qui fonctionne comme une antenne (12), par radio.

14. Procédé selon la revendication 13, **caractérisé en ce, que** les antennes (11, 12) d'une paire d'antennes, particulièrement dans la zone (7) ou avant l'embouchure du conduit individuel de raccordement (2) dans le conduit principal (1), sont orientées par rapport à sa position mutuelle pour optimaliser la transmission des données, en particulier parallèlement l'une par rapport à l'autre.

15. Procédé selon la revendication 13 ou 14, **caractérisé en ce, que** la communication entre les antennes (11, 12) des paires d'antennes des conduits individuels de raccordement (2a, 2b), lesdits conduits individuels de raccordement (2a, 2b) étant situés mutuellement dans la portée d'émission/réception de ses antennes (11, 12), est effectuée avec des fréquences différentes et/ou des protocoles différents.

16. Procédé selon une quelconque des revendications 13 à 15, **caractérisé en ce, que** plusieurs paires d'antennes sont associées à un conduit individuel de raccordement (2), et des fréquences différentes et/ou des protocoles différents sont utilisés pour la communication par chaque paire individuelle d'antennes associé à ce conduit individuel de raccordement (2).

17. Procédé selon une quelconque des revendications 13 à 16, **caractérisé en ce, que** la ligne de données (4) ainsi que la ligne ultérieure de données (6) sont mis en position par un robot télécommandé dans le conduit principal (1) et/ou dans le conduit individuel de raccordement (2, 2a, 2b) et/ou dans la zone (7) de l'embouchure du conduit individuel de raccordement (2) dans le conduit principal (1).

18. Procédé selon une quelconque des revendications 13 à 17, **caractérisé en ce, qu'**une zone finale de la ligne de données (4), qui fonctionne comme une antenne (11) ou présente une antenne est fait sortir ou attirée à partir d'une conduite de câbles (15) guidant la ligne de données (4), et que son bout est positionné devant un conduit individuel de raccordement (2).

19. Procédé selon une quelconque des revendications 13 à 18, **caractérisé en ce, que** les antennes (11, 12) des paires d'antennes sont positionnées par rapport à sa position mutuelle, dans laquelle résultera une vitesse maximale de transmission et/ou un amortissement minimal de la voie de transmission.

20. Procédé selon une quelconque des revendications 13 à 19, **caractérisé en ce, que** la longueur de la ligne de données (4) introduite dans le système de conduits ainsi que de la ligne ultérieure de donnés (6) est variée à partir d'un point de référence déterminé, préférablement situé à l'extérieur du système de conduits, et la longueur ou la position d'installation des lignes de données (4, 6) est déterminé, quand une introduction ou un dégagement ultérieure de la ligne de données (4) et/ou de la ligne ultérieure de données (6) produit une détérioration de la vitesse de transmission et/ou une augmentation de l'amortissement de la voie de transmission.

21. Procédé selon une quelconque des revendications 13 à 20, **caractérisé en ce, que** la paire d'antennes dans le conduit principal (1) est disposée an aval de l'embouchure du conduit individuel de raccordement ou du conduit d'embranchement (2a, 2b), de préférence à une distance, qui est plus petite que le diamètre du conduit d'embranchement.
